(19)

**Europäisches Patentamt**

**European Patent Office**

**Office européen des brevets**

(11) **EP 4 345 195 A2**

(12) **EUROPEAN PATENT APPLICATION**

(43) Date of publication:
**03.04.2024 Bulletin 2024/14**

(21) Application number: **23196098.0**

(22) Date of filing: **07.09.2023**

(51) International Patent Classification (IPC):
**C25B 1/04** *(2021.01)* **C25B 1/50** *(2021.01)*
**C25B 9/70** *(2021.01)* **C25B 15/00** *(2006.01)*
**C25B 15/02** *(2021.01)* **C25B 15/023** *(2021.01)*
**H02J 3/00** *(2006.01)* **H02J 15/00** *(2006.01)*

(52) Cooperative Patent Classification (CPC):
**C25B 1/04; C25B 1/50; C25B 9/70; C25B 15/00;
C25B 15/02; C25B 15/023; H02J 3/004;
H02J 15/008;** H02J 2300/24; H02J 2300/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.09.2022 US 202263404805 P**

(71) Applicants:
• **Cummins, Inc.**
**Columbus, Indiana 47201 (US)**
• **Hydrogenics Corporation**
**Mississauga, ON L5T 2N6 (CA)**

(72) Inventors:
• **Vickress, Dustin**
**Mississauga, L5N 5A9 (CA)**
• **Ancimer, Richard J.**
**Toronto, M6S 3R7 (CA)**
• **Chandraraj, Joseph P.**
**Austin, 78732 (US)**
• **Cargnelli, Joseph**
**Toronto, M9P 2P6 (CA)**

(74) Representative: **Bryer, Pamela Ruth**
**Marks & Clerk LLP**
**40 Torphichen Street**
**Edinburgh EH3 8JB (GB)**

(54) **SYSTEMS AND METHODS FOR MAXIMIZING HYDROGEN PRODUCTION FROM RENEWABLE ENERGY SOURCES**

(57) The present disclosure relates to systems and methods to forecast changes in renewable energy availability to maximize hydrogen production by electrolysis systems over a period of renewable energy availability. The present disclosure relates to a method of utilizing variable energy including using a look-ahead forecast model, which provides an assessment of available renewable energy. The present disclosure relates to a method of operating of one or more electrolyzer cell stacks in an electrolysis system to produce hydrogen by using the look-ahead forecast model in real-time.

*FIG. 2*

EP 4 345 195 A2

**Description**

**TECHNICAL FIELD**

The present disclosure relates to electrolysis systems, in particular systems and methods for maximizing hydrogen production from electrolysis systems using renewable energy sources.

**BACKGROUND**

Electrochemical cells and electrolytic cells use chemical reactions involving electricity. For example, a fuel cell uses hydrogen and oxygen to produce electricity. An electrolyzer uses water and electricity to produce hydrogen and oxygen.

The electrolyzer comprises one or more electrolytic cells that utilize electricity to chemically produce substantially pure hydrogen and oxygen from water. Often, the electrical source for the electrolyzer is produced from energy generation systems, including renewable energy systems, such as from wind, solar, hydroelectric, and/or geothermal sources. In turn, the pure hydrogen produced by the electrolyzer is often utilized as a fuel or energy source for those same energy generation systems, such as fuel cell systems.

The typical electrolytic cell, also referred to as an "electrolyzer cell," is comprised of many assemblies compressed and bound into a stack. An electrolytic cell includes a multi-component membrane electrode assembly (MEA) that has an anode, a cathode, and an electrolyte. Typically, the anode, cathode, and electrolyte of the membrane electrode assembly (MEA) are configured in a multi-layer arrangement that enables the electrochemical reaction to produce hydrogen via contact with one or more gas diffusion layers. A gas diffusion layer (GDL) and/or a porous transport layer (PTL) is typically located on one or both sides of the MEA. Bipolar plates (BPP) often reside on either side of the GDLs and separate the individual electrolytic cells of the stack from one another.

Green hydrogen is produced using variable renewable energy (VRE) sources to support an electrolysis system. The variable renewable energy (VRE) sources produce energy intermittently instead of on demand. Thus, the availability of energy can vary through the day, week, and/or season. The variable renewable energy (VRE) can include sources of energy, such as from solar energy, wind energy, tidal energy, geothermal or hydroelectric energy.

Operating electrolysis systems may involve delays, including start-up delays. For example stat-up delays may be associated with a dysfunction of hydrogen purification unit, compressors, and/or other downstream equipment. The start-up delays may also depend on the quality of hydrogen being produced.

Alternatively, the electrolyzer stacks or the electrolysis systems may be kept on standby in preparation for changes in VRE sources. However, keeping the electrolyzer stacks or the electrolysis systems on standby still uses energy. Furthermore, implementation of the electrolysis system(s) for any application requires coordination with equipment outages and/or scheduled preventative maintenance.

To overcome the challenges described above, the present disclosure provides systems and methods to forecast changes in renewable energy availability to maximize hydrogen production over an available period. The present disclosure provides systems and methods for implementing a look-ahead forecast model for hydrogen production.

**SUMMARY**

Embodiments of the present disclosure are included to meet these and other needs.

In one aspect described herein, a method of utilizing variable renewable energy comprises using a look-ahead forecast model, which provides an assessment of available renewable energy, determining an operation of one or more electrolyzer cell stacks in an electrolysis system to produce hydrogen by a controller which uses the look-ahead forecast model in real-time, and determining a time range of operation of each of the one or more electrolyzer cell stacks in the electrolysis system.

In some embodiments, the look-ahead forecast model mat be used to assess wind energy, solar energy, geothermal energy, hydro energy, or any combination thereof.

In some embodiments, the method may further comprise minimizing loss or missed production. In the first aspect of the present invention, minimizing loss may comprise minimizing energy loss. In some embodiments, minimizing missed production may comprise minimizing potential loss due to suboptimal implementation of the one or more electrolyzer cell stacks.

In some embodiments, the method may further comprise using the look-ahead forecast model for forecasting available variable energy over a period of about 14 days. In some embodiments, the method may further comprise the controller determining the operation of the one or more electrolyzer cell stacks based on a characteristic of the electrolysis system. The characteristic of the electrolysis system may include one or more of a capacity factor, a cost to produce hydrogen, and an availability of the electrolyzer cell stacks.

In some embodiments, the method may further comprise the controller determining the operation of the one or more electrolyzer cell stacks based on a constant hydrogen demand due to a designated process. In some embodiments, the method may further comprise the controller determining if excess hydrogen is being produced, and storing excess hydrogen produced in a hydrogen storage system. In some embodiments, the method may further comprise the controller determining if excess hydrogen is being produced based on the constant hydrogen demand due to the designated process.

In some embodiments, the method may further comprise the controller operating the one or more electrolyzer cell stacks in the electrolysis system based on the excess hydrogen stored in the hydrogen storage system.

In some embodiments, the method may further comprise the controller determining if insufficient hydrogen is being produced, and supplementing the hydrogen with stored hydrogen, or by adding electricity from a supplementary grid to produce a balance of hydrogen required. In some embodiments, the method may further comprise the controller determining if excess hydrogen is being produced based on the constant hydrogen demand due to the designated process, and minimizing utilizing supplementary grid if excess hydrogen is being produced. In the first aspect of the present invention, the method may further comprise the controller determining if excess hydrogen is being produced based on a downstream feedback from an equipment audit.

In some embodiments, downstream feedback from the equipment audit may comprise parameters including a capacity factor, a cost to produce hydrogen, an availability of the electrolyzer cell stacks, or amount of stored hydrogen.

In some embodiments, the method may further comprise the controller operating the one or more electrolyzer cell stacks to avoid a late start-up or to avoid missing out on the available renewable energy. In some embodiments, the method may further comprise the controller operating the one or more electrolyzer cell stacks to account for a change in renewable energy availability.

In a second aspect described herein, a system for utilizing available renewable energy comprises a controller in communication with a look-ahead forecast model, an electrolysis system including one or more electrolyzer stacks, and a hydrogen storage system to store any excess hydrogen produced. The operation of the one or more electrolyzer stacks is determined by the controller based on a look-ahead forecast model.

In some embodiments, the operation of the one or more electrolyzer stack in the system may be determined by the controller based on a constant hydrogen demand due to a designated process.

In some embodiments, the system may further comprises access to a power grid for the supply of supplementary power.

In some embodiments, the controller may further determine operation of the one or more electrolyzer cell stacks to account for changes in renewable energy availability.

At least some of the above and other features of the invention are set out in the claims.

## BRIEF DESCRIPTION OF THE DRAWINGS

These and other features, aspects, and advantages of the present invention will become better understood when the following detailed description is read with reference to the accompanying drawings, in which like characters represent like parts throughout the drawings, wherein:

FIG. 1A is perspective view of an electrolyzer cell stack according to the present disclosure;
FIG. 1B is a schematic view of an electrolysis system configured to utilize the electrolyzer cells stack of FIG. 1A;
FIG. 1C is a schematic view of an additional portion of the electrolysis system of FIG. 1B;
FIG. 2 is a schematic showing an embodiment of a method utilizing a look-ahead forecast model to determine hydrogen production;
FIG. 3 is a schematic showing an embodiment of a method utilizing the look-ahead forecast model to determine hydrogen production based on a designated process demand;
FIG. 4A is a schematic showing missed production when the look-ahead forecast model is not used to change the operation of the electrolyzer cell modules; and
FIG. 4B is a schematic showing that the electrolyzer cell modules can be ramped-up or ramped-down in response to the look-ahead forecast model.

## DETAILED DESCRIPTION

The present disclosure provides systems and methods to forecast changes in renewable energy availability to maximize hydrogen production by electrolysis systems over a period of energy availability. Electrochemical cells and electrolytic cells provide chemical reactions that include electricity. For example, a fuel cell stack uses hydrogen and oxygen to produce electricity. An electrolyzer cell stack uses water and electricity to produce hydrogen and oxygen.

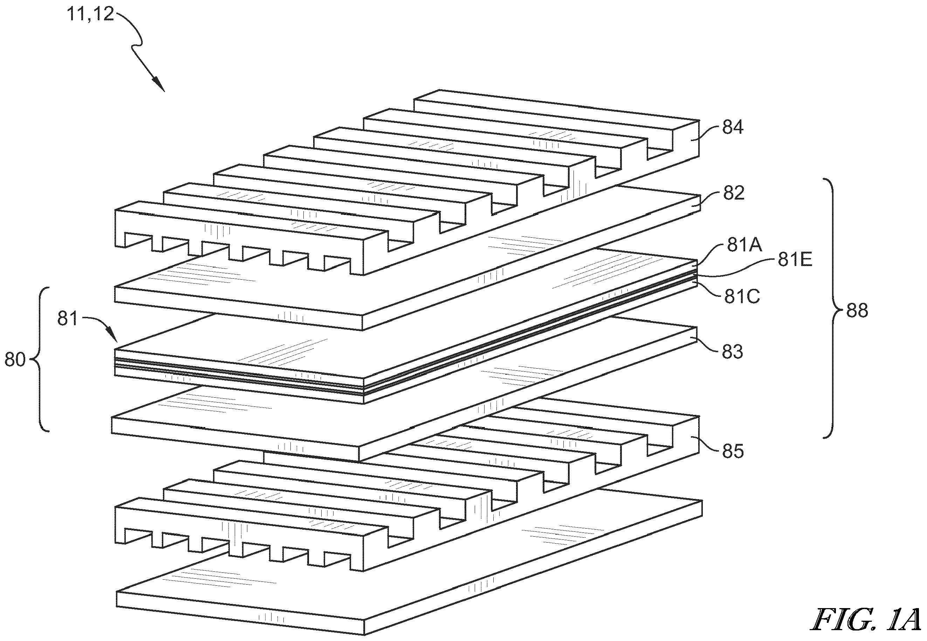

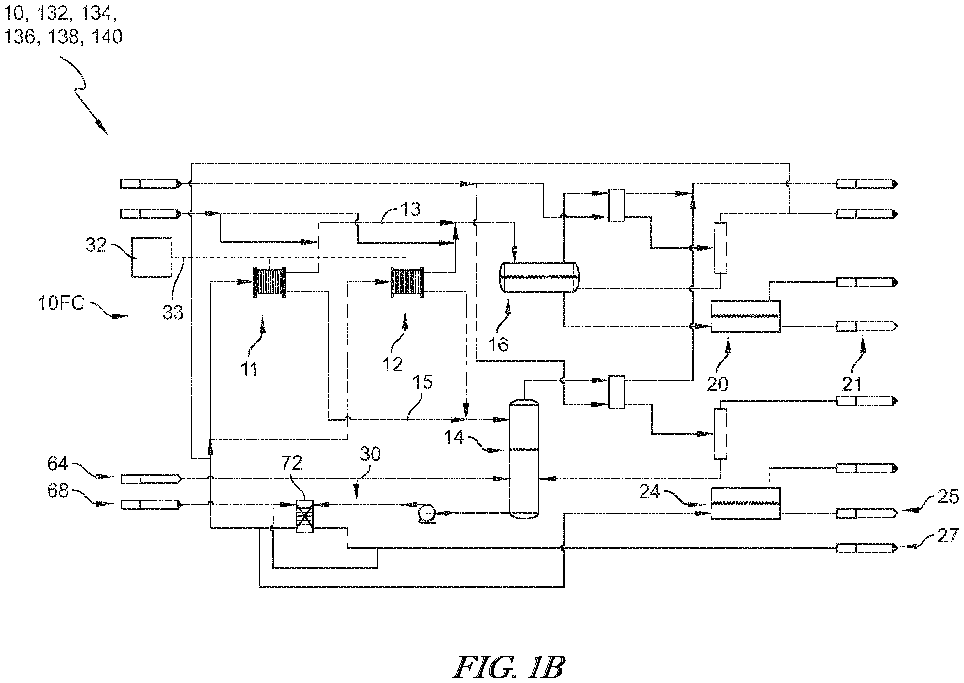

As shown in **FIGS. 1A** and **1B,** electrolysis systems **10** are typically configured to utilize water and electricity to produce hydrogen and oxygen. An electrolysis systems **10** typically includes one or more electrolyzer cells **80** that utilize electricity to chemically produce substantially pure hydrogen **13** and oxygen **15** from deionized water **30.** Often the electrical source for the electrolysis systems **10** is produced from power or energy generation systems, including renewable energy systems such as wind, solar, hydroelectric, and geothermal sources for the production of green hydrogen. In turn, the pure hydrogen produced by the electrolysis systems **10** is often utilized as a fuel or energy source for those same power generation systems, such as fuel cell systems. Alternatively, the pure hydrogen produced by the electrolysis systems **10** may be stored for later use.

The typical electrolyzer cell **80,** or electrolytic cell, is comprised of multiple assemblies compressed and bound into a single assembly, and multiple electrolyzer cells **80** may be stacked relative to each other, along with bipolar plates (BPP) **84, 85** therebetween, to form an electrolyzer cell stack (for example, electrolyzer cell stacks **11, 12** in **FIG. 1B**). Each electrolyzer cell stack **11, 12** may house a plurality of electrolyzer cells **80** connected together in series and/or in parallel. The number of electrolyzer cell stack **11, 12** in the electrolysis systems **10** can vary depending on the amount of power required to meet the power need of any load (e.g., fuel cell stack). The number of electrolyzer cells **80** in an electrolyzer cell stack **11, 12** can vary depending on the amount of power required to operate the electrolysis systems **10** including the electrolyzer cell stack **11, 12.**

An electrolyzer cell **80** includes a multi-component membrane electrode assembly (MEA) **81** that has an electrolyte **81E,** an anode **81A,** and a cathode **81C.** Typically, the anode **81A,** cathode **81C,** and electrolyte 81E of the membrane electrode assembly (MEA) **81** are configured in a multi-layer arrangement that enables the electrochemical reaction to produce hydrogen and/or oxygen via contact of the water with one or more gas diffusion layers **82, 83.** The gas diffusion layers (GDL) **82, 83,** which may also be referred to as porous transport layers (PTL), are typically located on one or both sides of the MEA **81.** Bipolar plates (BPP) **84, 85** often reside on either side of the GDLs and separate the individual electrolyzer cells **80** of the electrolyzer cell stack **11, 12** from one another. One bipolar plate **85** and the adjacent gas diffusion layers **82, 83** and MEA **81** can form a repeating unit **88.**

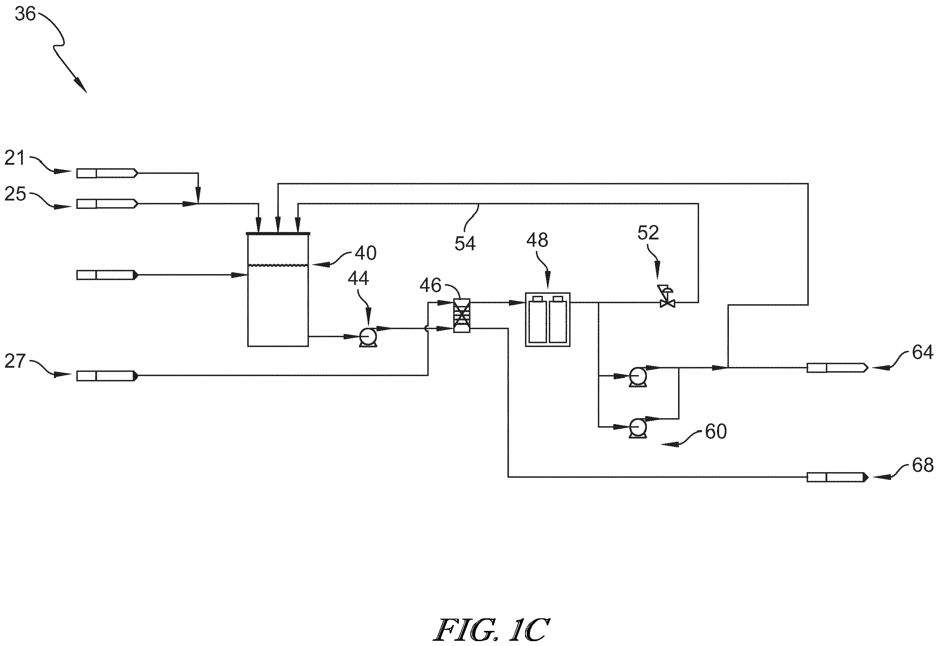

As shown in **FIGS. 1B** and **1C,** an example electrolysis system **10** can include two electrolyzer cell stacks **11, 12** and a fluidic circuit **10FC** including the various fluidic pathways shown in **FIGS. 1B** and **1C** that is configured to circulate, inject, and purge fluid and other components to and from the electrolysis systems **10.** A person skilled in the art would understand that one or a variety of a number of components within the fluidic circuit **10FC,** as well as more or less than two electrolyzer cell stacks **11, 12,** may be utilized in the electrolysis systems **10.** For example, the electrolysis systems **10** may include one electrolyzer cell stack **11,** and in other examples, the electrolysis systems **10** may include three or more electrolyzer cell stacks.

The electrolysis systems **10** may include one or more types of electrolyzer cell stacks **11, 12** therein. In the illustrated embodiment, a polymer electrolyte membrane (PEM) electrolyzer cell **80** may be utilized in the stacks **11, 12.** A PEM electrolyzer cell **80** typically operates at about 4°C to about 150°C, including any specific or range of temperatures comprised therein. A PEM electrolyzer cell **80** also typically functions at about 100 bar or less, but can go up to about 1000 bar (including any specific or range of pressures comprised therein), which reduces the total energy demand of the system. A standard electrochemical reaction that occurs in a PEM electrolyzer cell **80** to produce hydrogen is as follows.

- 

$$\text{Anode: } 2H_2O \rightarrow O_2 + 4H^+ + 4e^- \qquad (1)$$

- 

$$\text{Cathode: } 4H^+ + 4e^- \rightarrow 2H_2 \qquad (2)$$

- 

$$\text{Overall: } 2H_2O \text{ (liquid)} \rightarrow 2H_2 + O_2 \qquad (3)$$

Additionally, a solid oxide electrolyzer cell **80** may be utilized in the electrolysis systems **10.** A solid oxide electrolyzer cell **80** will function at about 500°C to about 1000°C, including any specific or range of temperatures comprised therein. A standard electrochemical reaction that occurs in a solid oxide electrolyzer cell **80** to produce hydrogen is as follows.

-

$$\text{Anode: } 2O^{2-} \rightarrow O_2 + 4e^- \qquad (4)$$

$$\text{Cathode: } 2H_2O \rightarrow 4e^- + 2H_2 + 2O^{2-} \qquad (5)$$

$$\text{Overall: } 2H_2O \text{ (liquid)} \rightarrow 2H_2 + O_2 \qquad (6)$$

Moreover, an AEM electrolyzer cell **80** may utilized, which uses an alkaline media. An example AEM electrolyzer cell **80** is an alkaline electrolyzer cell **80**. Alkaline electrolyzer cells **80** comprise aqueous solutions, such as potassium hydroxide (KOH) and/or sodium hydroxide (NaOH), as the electrolyte. Alkaline electrolyzer cells **80** typically perform at operating temperatures ranging from about 0°C to about 150°C, including any specific or range of temperatures comprised therein. Alkaline electrolyzer cell **80** generally operate at pressures ranging from about 1 bar to about 100 bar, including any specific or range of pressures comprised therein. A typical hydrogen-generating electrochemical reaction that occurs in an alkaline electrolyzer cell **80** is as follows.

$$\text{Anode: } 4OH^- \rightarrow O_2 + 2H_2O + 4e^- \qquad (7)$$

$$\text{Cathode: } 4H_2O + 4e^- \rightarrow 2H_2 + 4OH^- \qquad (8)$$

$$\text{Overall: } 2\ H_2O\ 2H_2 + O_2 \qquad (9)$$

As shown in **FIG. 1B,** the electrolyzer cell stacks **11, 12** include one or more electrolyzer cells **80** that utilize electricity to chemically produce substantially pure hydrogen and oxygen from water. In turn, the pure hydrogen produced by the electrolyzer may be utilized as a fuel or energy source. As shown in **FIG. 1B,** the electrolyzer cell stack **11, 12** outputs the produced hydrogen along a fluidic connecting line **13** to a hydrogen separator **16,** and also outputs the produced oxygen along a fluidic connecting line **15** to an oxygen separator **14.**

The hydrogen separator **16** may be configured to output pure hydrogen gas and also send additional output fluid to a hydrogen drain tank **20,** which then outputs fluid to a deionized water drain **21.** The oxygen separator **14** may output fluid to an oxygen drain tank **24,** which in turn outputs fluid to a deionized water drain **25.** A person skilled in the art would understand that certain inputs and outputs of fluid may be pure water or other fluids such as coolant or byproducts of the chemical reactions of the electrolyzer cell stacks **11, 12.** For example, oxygen and hydrogen may flow away from the cell stacks **11, 12** to the respective separators **14, 16.** The system **10** may further include a rectifier **32** configured to convert electricity **33** flowing to the cell stacks **11, 12** from alternating current (AC) to direct current (DC).

The deionized water drains **21, 25** each output to a deionized water tank **40,** which is part of a polishing loop **36** of the fluidic circuit **10FC,** as shown in **FIG. 1C.** Water with ion content can damage electrolyzer cell stacks **11, 12** when the ionized water interacts with internal components of the electrolyzer cell stacks **11, 12.** The polishing loop **36,** shown in greater detail in **FIG. 1C,** is configured to deionize the water such that it may be utilized in the cell stacks **11, 12** and not damage the cell stacks **11, 12.**

In the illustrated embodiment, the deionized water tank **40** outputs fluid, in particular water, to a deionized water polishing pump **44.** The deionized water polishing pump **44** in turn outputs the water to a water polishing heat exchanger **46** for polishing and treatment. The water then flows to a deionized water resin tank **48.**

Coolant is directed through the electrolysis systems **10,** in particular through a deionized water heat exchanger **72** that is fluidically connected to the oxygen separator **14.** The coolant used to cool said water may also be subsequently fed to the water polishing heat exchanger **46** via a coolant input **27** for polishing. The coolant is then output back to the deionized water heat exchanger **72** for cooling the water therein.

After the water is output from the deionized water polishing heat exchanger **46** and subsequently to the deionized water resin tank **48,** a portion of the water may be fed to deionized water high pressure feed pumps **60.** Another portion of the water may be fed to a deionized water pressure control valve **52,** as shown in **FIG. 1C.** The portion of the water that is fed to the deionized water pressure control valve **52** flows through a recirculation fluidic connection **54** that allows the water to flow back to the deionized water tank **40** for continued polishing.

In some embodiments, the electrolysis systems **10** may increase deionized water skid for polishing water flow to flush out ions within the water at a faster rate. The portion of the water that is fed to the deionized water high pressure feed pumps **60** is then output to a deionized water feed **64,** which then flows into the oxygen separator **14** for recirculation and eventual re-usage in the electrolyzer cell stacks **11, 12.** This process may then continuously repeat.

The electrolysis systems **10** described herein, may be used in stationary and/or immovable power system, such as industrial applications and power generation plants. The electrolysis systems **10** may also be implemented in conjunction with other electrolysis systems **10.**

The present electrolysis systems **10** may be comprised in stationary or mobile applications. The electrolysis systems **10** may be in a vehicle or a powertrain **100.** A vehicle or powertrain **100** comprising the electrolysis systems **10** may be an automobile, a pass car, a bus, a truck, a train, a locomotive, an aircraft, a light-duty vehicle, a medium-duty vehicle, or a heavy-duty vehicle.

In addition, it may be appreciated by a person of ordinary skill in the art that the electrolysis system **10,** electrolyzer stack **11, 12,** and/or the electrolyzer cell **80** described in the present disclosure may be substituted for any electrochemical system, such as a fuel cell system, a fuel cell stack, and/or a fuel cell (FC), respectively. As such, in some embodiments, the features and aspects described and taught in the present disclosure regarding electrolysis system **10,** electrolyzer stack **11, 12,** and/or the electrolyzer cell **80** also relate to a fuel cell system, a fuel cell stack, and/or a fuel cell (FC), respectively. In further embodiments, the features and aspects described or taught in the present disclosure do not relate, and are therefore distinguishable from, those of a fuel cell system, a fuel cell stack, and/or a fuel cell (FC).

As shown in **FIG. 1B,** the electrolysis system **10** may be a water electrolysis system and may include a capacity factor **132.** The capacity factor **132** is the percent of time that electrolysis system **10** operates relative to all hours in a year. Since a levelized cost of hydrogen (LCOH) **140** accounts for all the capital and operating costs of producing hydrogen, the LCOH **140** is sensitive to capital expense (CapEx) of the electrolysis system **134,** capital expense (CapEx) for balance of plant **136,** (e.g., hydrogen compressor and storage system), and/or any installation, operational, and maintenance expenses **138.**

The capital expense (CapEx) of the electrolysis system **134** contributes significantly to LCOH **140** and depends on the capacity factor **132** of the electrolysis system **10.** The capacity factor **132** of the electrolysis system **10** may be maximized to minimize LCOH **140** associated with any installation, operational and maintenance expenses **138.**

The optimal operating configuration of the electrolyzer cell stacks **11, 12** of the electrolysis system **10** may be dependent on the availability of renewable energy (including cost of electricity) and the capacity factor **132** of the electrolysis system **10.** A setpoint may be defined as the set of operating conditions (e.g., operating pressure, operating temperature, capacity factor **132,** LCOH **140** etc.) associated with a set of input and/or output requirements (e.g., change in input power, amount of produced hydrogen gas) of the electrolyzer cell stack **11, 12.** Though electrolyzer cell stack **11, 12** are responsive units, delays may be incurred when the setpoint is changed because of a change in the operating conditions.

Such delay may be incurred when the electrolysis system **10** includes an array of electrolyzer cell stacks **11, 12** instead of a single unit. The delay may be incurred because of the need to turn each electrolyzer cell stacks **11, 12** on or off as part of a response to changing need and/or renewable energy availability. Not anticipating such delays can result in a decrease in hydrogen production and/or can affect a power balance of stack equipment in the electrolysis system **10** when renewable energy availability is low.

For example, the electrolyzer stack **11, 12** may be able to respond to a single step change in production percentage (%), but may be unable to implement consecutive step changes without one or more advanced control loops. For example, a switch or a change from a 60% system production percentage to a 100% system production percentage may be achieved with the delay required by the system **10** to respond to the change (e.g., quick change and/or significant step change in power demand). In one embodiment, the system production percentage cannot be changed again until the setpoint indicating the new production percentage is stabilized, such as demonstrated by operational and/or functional response of the system **10** (e.g., system production reaches and/or nears new production setpoint).

Certain step changes may require operating more electrolyzers stacks **11, 12** in the electrolysis system **10** and/or operating additional electrolysis systems **10.** For example, a step change of 10% or more may require the implementation of one or more additional electrolyzer stacks **11, 12** in the electrolysis system **10.** A step change of 10% or less may be accommodated by the existing number of electrolyzers stacks **11, 12** in the electrolysis system **10,** such that no additional electrolyzer stacks are required. The percentage (%) step change that may entail the need for an additional electrolyzer stack **11, 12** in the electrolysis system **10** will depend on the design characteristics of the one or more electrolyzers stacks **11, 12** (e.g., maximum power output, power demand, application, etc.).

Several factors may be considered to ensure that the setpoint of the electrolysis system **10** is optimally determined or established. The factors may include cost of electricity, electrolyzer cell stacks **11, 12** efficiency, and electrolyzer cell stacks **11, 12** availability. The electrolyzer cell stacks **11, 12** availability assessment may be based on unavailability due to start-up delays, shut down delays, delays due to changes in operational setpoints, and/or preventative maintenance.

For example, if production is switched or changed from about 10% production to up to about 80% production, the electrolysis system **10** may require some a time period (e.g., a delay) to functionally and stably reach its new setpoint. The time period or delay may depend on the characteristics of the electrolyzer cell stacks **11, 12.** In some embodiments, this delay may range from 1 minute to about 1 day, including any time or range of time comprised therein. For example, depending on the characteristics of the electrolyzer cell stacks **11, 12,** this delay may range from about 1 minute to about 10 minutes, from about 10 minutes to about 1 hour, from about 1 hour to about 3 hours, from about 3 hours to about 5 hours, from about 5 hours to about 10 hours, from about 10 hours, to about 24 hours. In some embodiments, this delay may be more than 24 hours or less than 1 minute. As a result, there may be a limit to how many times the setpoints can be changed in a given period of time. This limit may depend on the application of the electrolysis system **10** and/or the power demand required. Thus, predicting and/or functionally achieving the first setpoint may be critical to the efficient operation of the electrolysis system **10.**

Additionally or alternatively, the electrolyzer cell stacks **11, 12** availability assessment may be based capital expenses (CapEx) of the electrolysis system **134** recovery over the life of equipment (e.g., recovery of the initial expenditure of establishing the electrolysis system **10** over lifetime of the equipment), capital expenses (CapEx) of the balance of plant **136** recovery over the life of equipment (e.g., recovery of the initial expenditure of establishing the balance of plant over lifetime of the equipment), availability of renewable energy (e.g., electricity and/or hydrogen), and/or other customer-specific recovery metrics, as measured against a total cost of ownership and/or operations.

The electrolyzer cell stacks **11, 12** availability assessment may also be based on operations and/or management costs to run the electrolysis system **10.** Such operations and/or management costs of any electrolysis system **10** may include costs of replacing major components (e.g. pumps), costs of replacing minor components (e.g. drain valves), costs of replacing disposable components (e.g. resin tanks), cost of electricity to operate the system, and/or cost of routine and/or preventative maintenance (e.g. checking valve timing), as measured against a total cost of ownership and/or operations.

The present disclosure is directed to systems and methods for implementing one or more electrolyzer cell stacks **11, 12** in one or more electrolyzer cell module(s) **144** in an optimal configuration to balance hydrogen production by each electrolyzer cell stacks **11, 12** and/or electrolyzer cell module **144** using a look-ahead forecast model. The look-ahead forecast model **312** can estimate the upcoming renewable energy load and forecast its predictions throughout each day. The look-ahead forecast model **312** can estimate the upcoming renewable energy load and forecast its predictions in real-time. For example, the look-ahead forecast model **312** can make predictions instantaneously and/or as soon as information about the renewable energy is available. The look-ahead forecast model **312** can prepare electrolyzer cell stacks **11, 12** and/or electrolyzer cell modules **144** to maximize hydrogen production.

The number of electrolyzer cell modules **144** that may associated with the present look-ahead forecast model **312** can be any number. For example, the number of electrolyzer cell modules **144** may range from 1 to about 50, including any number or range comprised therein. For example, the number of electrolyzer cell modules **144** can range from 1 to 5, from 5 to 15, from 15 to 25, from 25 to 35, from 35 to 45, or from 45 to 50. In some embodiments, the number of electrolyzer cell modules **144** can be more than 50.

The number of electrolyzer cell stacks **11, 12** in each electrolyzer cell modules **144** can range from 1 to about 50, including any number or range comprised therein. For example, the number of electrolyzer cell stacks **11, 12** in each electrolyzer cell modules **144** can range from 1 to 5, from 5 to 15, from 15 to 25, from 25 to 35, from 35 to 45, or from 45 to 50. In some embodiments, the number of electrolyzer cell stacks **11, 12** in each electrolyzer cell modules **144** can be more than 50. The electrolyzer cell stacks **11, 12** in each electrolyzer cell modules **144** may be the same or may be different.

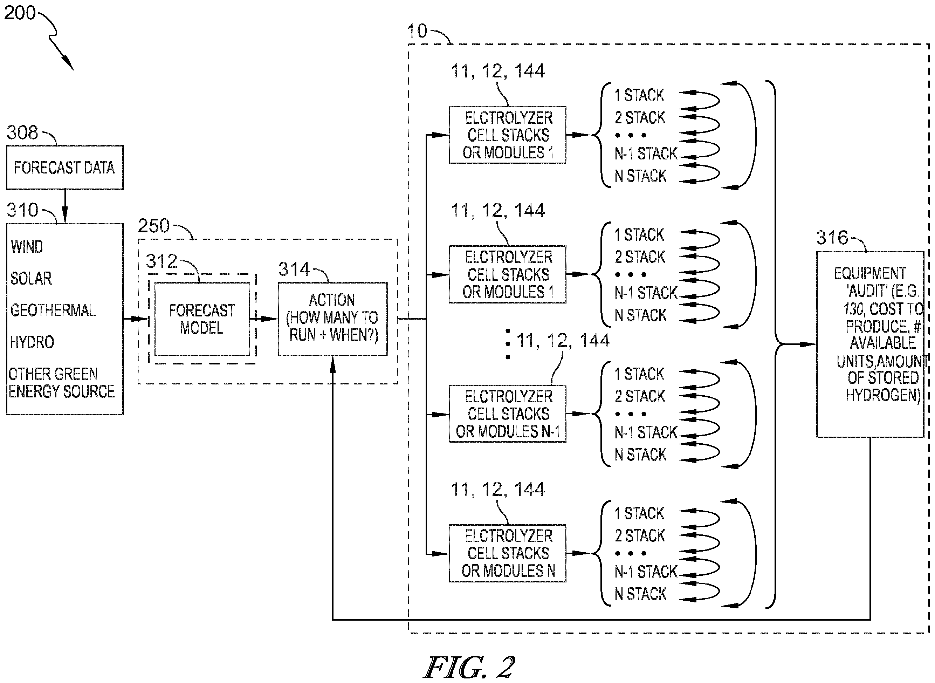

In one embodiment, as shown in **FIG. 2,** a strategy or method **200** utilizes a look-ahead forecast model **312** to determine, calculate, and/or estimate hydrogen production. The look-ahead forecast model **312** can be used to convert all available renewable energy (RE) **310** into storage if hydrogen production is not required. The available RE **310** can include any combination of wind energy, solar energy, geothermal energy, hydro-energy, and/or any other green energy source. Additionally or alternatively, non-green energy sources may also be used with the look-ahead forecast model **312.**

The available RE **310** can be determined or calculated based on forecast data **308** (e.g., weather forecast data). The objective of the strategy or method **200,** including the look-ahead forecast model **312,** can include minimizing loss and missed production by forecasting available variable RE **310.** Minimizing loss and/or minimizing missed production ensures that available variable RE **310** is not lost and better yet, that the available variable RE **310** is converted to hydrogen.

In some embodiments, minimizing loss and/or minimizing missed production ensures that available variable RE **310** may result in a loss of about 30% to about 0% available variable RE **310,** including any percentage or range comprised therein. For example, in some embodiments, minimizing loss and/or minimizing missed production ensures that available variable RE **310** may result in a loss of about 30% to about 20%, about 20% to about 10%, about 10% to about 5%, about 5% to about 0% available variable RE **310,** including any percentage or range comprised therein.

The look-ahead forecast model **312** can forecast and/or predict available variable RE **310** over a range of about an hour to 14 days, including any time or range of time comprised therein. For example, the look-ahead forecast model **312** can forecast available variable RE **310** over a range about an hour to about a day, from about a day to about 2 days, from about 2 days, to about 4 days, from about 4 days to about 7 days, a from about 7 days to about 14 days, including any time or range of time comprised therein. The look-ahead forecast model **312** can determine, predict, and/or estimate a time range of operation for the electrolyzer cell stacks **11, 12** in each electrolyzer cell module **144** based on the forecasted available variable RE **310.**

The look-ahead forecast model **312** may be implemented to use the available variable RE **310** in order to optimize the conversion of renewable electricity (RE) to hydrogen based on several factors. For example, the available variable RE **310** may be calculated as follows.

$$\text{Available Variable RE} = \text{Hydrogen Production} + \text{Loss} + \text{Missed Production} \quad (10)$$

Loss identified in equation (10) can include any incurred energy loss (e.g. running electrolyzer cell stacks **11, 12** and/or electrolyzer cell modules **144** on standby). Missed production identified in equation (10) can include potential loss due to suboptimal implementation of electrolyzer cell stacks **11, 12** and/or electrolyzer cell modules **144** (e.g. running fewer electrolyzer cell stacks **11, 12** and/or electrolyzer cell modules **144** than the number required to capture all available RE).

As shown in **FIG. 2,** a controller **250** can determine or implement an action **314** that can result in an operation of the electrolyzer cell stacks **11, 12** and/or electrolyzer cell modules **144** in the electrolysis system **10.** The action **314** is dependent on the look-ahead forecast model **312** and/or on one or more equipment audit parameters or characteristics **316** of the electrolysis system **10.** The equipment audit parameters **316** can include, but are not limited to capacity factor **132,** a cost to produce hydrogen (e.g., levelized cost of hydrogen (LCOH) **140**), an amount of stored hydrogen, availability of the electrolyzer cell stacks **11, 12,** and/or electrolyzer cell modules **144.** The equipment audit parameters **316** can be used to provide a downstream feedback to the look-ahead forecast model **312.**

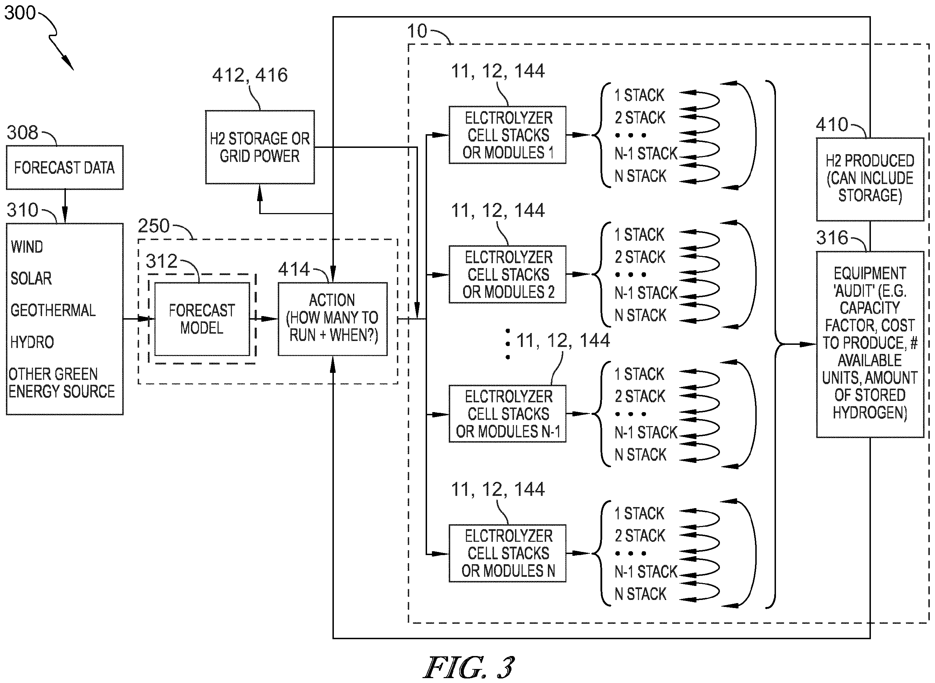

In another embodiment, as shown in **FIG. 3,** a strategy or method **300** utilizes the look-ahead forecast model **312.** This embodiment accounts for a constant hydrogen demand due to a designated process demand when the electrolysis system **10** is operating with both variable RE **310** and a supplementary grid **416.** The constant hydrogen demand is based on the designated process demand. For example, the constant hydrogen demand may indicate a certain amount of hydrogen needed, a certain amount of time, and/or a certain power demand for which hydrogen is needed. The strategy or method **300** may include minimizing use of non-green electricity sources for the designated process.

The available RE **310** can include any combination of wind energy, solar energy, geothermal energy, hydro-energy, and/or any other green energy source. The available RE **310** can be determined calculated, and/or estimated based on forecast data **308** (e.g., weather forecast data) and/or the balance of required electricity can be predicted and requested from the supplementary grid **416.** Hydrogen that is produced is used to meet the designated process demand of the electrolysis system **10.**

Still referring to **FIG. 3,** the controller **250** can implement or configure an action **414** to determine and/or regulate the operation of the electrolyzer cell stacks **11, 12** and/or the electrolyzer cell modules **144** in the electrolysis system **10.** Input into the configuration of the action **414** can also include an assessment of a total hydrogen produced **410** by the electrolysis system **10.** Since demand for hydrogen is constant, the controller **250** can determine, predict, and/or estimate if the total hydrogen produced **410** requires a supplemental power (e.g., additional power or power source) to meet the designated process demand. In some embodiments, if supplemental power is required, no hydrogen may be generated since it is expected that the generated hydrogen will be insufficient to meet demand without supplementing power. In some embodiments, the supplemental power may be minimized by converting available RE **310** to hydrogen at the highest efficiency based on the look-ahead forecast model **312.**

In some embodiments, if the available RE **310** is in excess of the amount required to meet the required hydrogen needs of the designated process, any excess hydrogen produced may be held and/or stored in a hydrogen storage system **412** for future use. The action **414** is dependent on the look-ahead forecast model **312,** the equipment audit parameters or characteristics **316** of the electrolysis system **10,** and/or on the total hydrogen produced **410** by the electrolysis system **10.** The objective of the action **414** determined and/or implemented by the controller **250** may include identifying if the excess hydrogen stored in the hydrogen storage system **412** (e.g., battery, compressed gas, or liquid hydrogen) or the supplementary grid **416** is required to supplement the available renewable energy **310** to meet the designated process demand.

The action **414** may be based on maximizing the captured RE **310** and minimizing the use of hydrogen from the hydrogen storage system **412** and/or minimizing the utilization of the supplementary grid **416.** The action **414** may be based on producing a constant amount of hydrogen irrespective of the available RE **310.** Hydrogen production may be calculated, determined or estimated based on several factors. For example, hydrogen production may be calculated as follows:

$$\text{Constant Hydrogen Production} = \text{Available Variable RE} + \text{Consumed Storage} \quad (11)$$

Consumed storage identified in equation (11) is the amount of stored hydrogen required to supplement the RE **310** based on hydrogen required for the designated process. As shown in **FIG. 3,** consumed storage may be equivalent to the supplementary grid **416** power. When RE **310** is insufficient to produce the required volume of hydrogen (e.g., when insufficient hydrogen is produced based on designated process demand), electricity from the supplementary grid **416** can be added to meet the designated process demand. The designated process may be a process including but not limited to ammonia or fertilizer production, chemical industries, synthetic fuel production, metal refineries, electronic industries, metal or glass industries, and food industries.

The look-ahead forecast model **312** can use a risk-based approach. Risk may be a function of impact and/or likelihood. Impact may depend on a potential availability of RE **310** based on a forecast of RE **310** and likelihood may be based on occurrence at predicted levels.

For example, if the RE **310** includes solar energy, and the forecast predicts morning overcast with afternoon clear skies, based on historic records and weather forecasts, there can be about a 40% likelihood of clear skies at about 1:00 pm. Therefore, the look-ahead forecast model **312** can determine or establish that the electrolyzer cell stacks **11, 12** and/or electrolyzer cell modules **144** may need to start-up at an optimized gradual rate to track the transition in weather. All historic data may be continuously and/or periodically updated to improve future predictions.

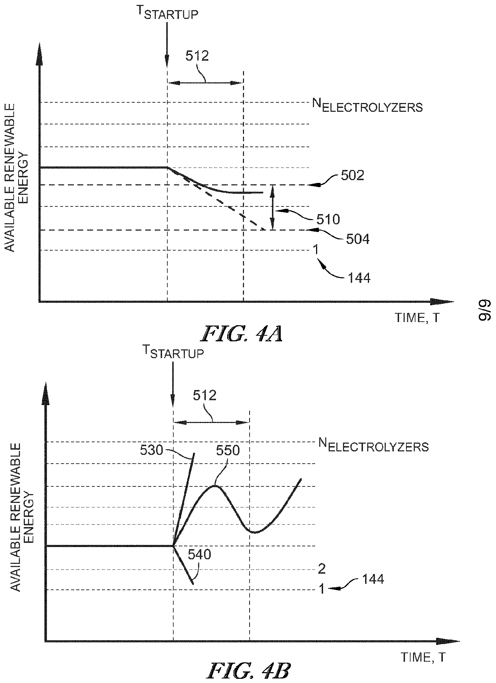

As shown in **FIG. 4A,** the electrolyzer cell modules **144** operating in the electrolysis system **10** may be changed from a current operation strategy **502** to a new operation strategy **504** based on a manual or sub-optimal prediction of RE **310** by the controller **250** (**FIG. 2, 3**). When the look-ahead forecast model **312** is not used to change the operation of the electrolyzer cell modules **144** in the electrolysis system **10,** there may be some missed production **510.** Time to start-up **512** an electrolyzer cell module **144** is typically not accounted for when changing operating strategies and such decisions may result in decision latency.

As shown in **FIG. 4B,** the electrolyzer cell modules **144** operating in the electrolysis system **10** may be ramped-up and/or ramped-down in response to the look-ahead forecast model **312.** The number of operating electrolyzer cell modules **144** as determined, calculated, or established by the controller **250** (**FIG. 2, 3**), may be based on pre-defined metrics, including customer-specific goals and/or total cost of ownership. Ownership may include maintenance, electricity rates, and/or cost of utilities. The number of operating electrolyzer cell modules **144** may be determined or calculated to avoid a late shutdown of any of the electrolyzer cell modules **144** and to avoid wasting electricity on standby.

Additionally, or alternatively, the number of operating electrolyzer cell modules **144** may be determined, predicted, or estimated by the controller **250** (**FIG. 2, 3**), to avoid late start-ups and/or to avoid missing out on available RE **310.** For example, if the available RE **310** is more than the capacity to produce hydrogen based on the operating electrolyzer cell modules **144,** additional electrolyzer cell modules **144** may be started for operation.

In some embodiments, the look-ahead forecast model **312** (**FIGS. 2, 3**) may also determine or regulate the number of electrolyzer cell stacks **11, 12** that are operating in any given electrolyzer cell modules **144.** Each electrolyzer cell stack **11, 12** can operate at a given production percentage ranging from about 5% to about 100%, including any percentage or range of production percentage comprised therein. Additionally, or alternatively, the number of operating electrolyzer cell modules **144** may be determined, regulated, or established to account for change in and/or fluctuations in RE **310** availability.

Referring back to **FIG. 4B,** if the available RE **310** increases with time, an operation strategy **530** accounts for this increase. Alternatively, if the available RE **310** decreases with time, an operation strategy **540** accounts for this decrease. Alternatively, if the change in the available RE **310** is a composite of an increase available RE **310** and a decrease available RE **310,** an operation strategy **550** accounts for the composite change based on the look-ahead forecast model **312.**

The controller **250** (see **FIGS. 2, 3**) may be in communication with a computing device comprising a processor over a network. The computing device may be embodied as any type of computation or computer device capable of performing the functions described herein, including, but not limited to, a server (e.g., stand-alone, rack-mounted, blade, etc.), a network appliance (e.g., physical or virtual), a high-performance computing device, a web appliance, a distributed computing system, a computer, a processor-based system, a multiprocessor system, a smartphone, a tablet computer, a laptop computer, a notebook computer, and a mobile computing device.

The computing device may include one or more of a processor, an input/output (I/O) subsystem, a memory, a data storage device, a communication subsystem, and/or a display that may be connected to each other, in communication with each other, and/or configured to be connected and/or in communication with each other through wired, wireless and/or power line connections and associated protocols (e.g., Ethernet, InfiniBand®, Bluetooth®, Wi-Fi®, WiMAX, 3G, 4G LTE, 5G, etc.).

The computing device may also include additional and/or alternative components, such as those commonly found in a computer (e.g., various input/output devices). In other embodiments, one or more of the illustrative computing device of components may be incorporated in, or otherwise form a portion of, another component. For example, the memory, or portions thereof, may be incorporated in the processor.

The following described aspects of the present invention are contemplated and non-limiting:

A first aspect of the present invention relates to a method of utilizing variable renewable energy. The method comprises using a look-ahead forecast model, which provides an assessment of available renewable energy, determining an operation of one or more electrolyzer cell stacks in an electrolysis system to produce hydrogen by a controller which uses the look-ahead forecast model in real-time, and determining a time range of operation of each of the one or more electrolyzer cell stacks in the electrolysis system.

A second aspect of the present invention relates to a system for utilizing available renewable energy. The system comprises a controller in communication with a look-ahead forecast model, an electrolysis system including one or more electrolyzer stacks, and a hydrogen storage system to store any excess hydrogen produced. The operation of the one or more electrolyzer stacks is determined by the controller based on a look-ahead forecast model.

In the first aspect of the present invention, the look-ahead forecast model mat be used to assess wind energy, solar energy, geothermal energy, hydro energy, or any combination thereof.

In the first aspect of the present invention, the method may further comprise minimizing loss or missed production. In the first aspect of the present invention, minimizing loss may comprise minimizing energy loss. In the first aspect of the present invention, minimizing missed production may comprise minimizing potential loss due to suboptimal implementation of the one or more electrolyzer cell stacks.

In the first aspect of the present invention, the method may further comprise using the look-ahead forecast model for forecasting available variable energy over a period of about 14 days. In the first aspect of the present invention, the method may further comprise the controller determining the operation of the one or more electrolyzer cell stacks based on a characteristic of the electrolysis system. The characteristic of the electrolysis system may include one or more of capacity factor, cost to produce hydrogen, and availability of the electrolyzer cell stacks.

In the first aspect of the present invention, the method may further comprise the controller determining the operation of the one or more electrolyzer cell stacks based on a constant hydrogen demand due to a designated process. In the first aspect of the present invention, the method may further comprise the controller determining if excess hydrogen is being produced, and storing excess hydrogen produced in a hydrogen storage system. In the first aspect of the present invention, the method may further comprise the controller determining if excess hydrogen is being produced based on the constant hydrogen demand due to the designated process.

In the first aspect of the present invention, the method may further comprise the controller operating the one or more electrolyzer cell stacks in the electrolysis system based on the excess hydrogen stored in the hydrogen storage system.

In the first aspect of the present invention, the method may further comprise the controller determining if insufficient hydrogen is being produced, and supplementing the hydrogen with stored hydrogen, or by adding electricity from a supplementary grid to produce a balance of hydrogen required. In the first aspect of the present invention, the method may further comprise the controller determining if excess hydrogen is being produced based on the constant hydrogen demand due to the designated process, and minimizing utilizing supplementary grid if excess hydrogen is being produced. In the first aspect of the present invention, the method may further comprise the controller determining if excess hydrogen is being produced based on a downstream feedback from an equipment audit.

In the first aspect of the present invention, downstream feedback from the equipment audit may comprise parameters including capacity factor, cost to produce hydrogen, availability of the electrolyzer cell stacks, or amount of stored hydrogen.

In the first aspect of the present invention, the method may further comprise the controller operating the one or more electrolyzer cell stacks to avoid a late start-up or to avoid missing out on the available renewable energy. In the first aspect of the present invention, the method may further comprise the controller operating the one or more electrolyzer cell stacks to account for a change in renewable energy availability.

In the second aspect of the present invention, the operation of the one or more electrolyzer stack in the system may be determined by the controller based on a constant hydrogen demand due to a designated process.

In the second aspect of the present invention, the system may further comprises access to a power grid for the supply of supplementary power.

In the second aspect of the present invention, the controller may further determine operation of the one or more electrolyzer cell stacks to account for changes in renewable energy availability.

The features illustrated or described in connection with one example embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

The above embodiments are described in sufficient detail to enable those skilled in the art to practice what is claimed and it is to be understood that logical, mechanical, and electrical changes may be made without departing from the scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first," "second," "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of" or "consists of" refers to a compound, composition, formulation, or method that excludes the presence of any additional elements, components, or method steps. The term "consisting of" also refers to a compound, composition, formulation, or method of the present disclosure that excludes the presence of any additional elements, components, or method steps.

The phrase "consisting essentially of" or "consists essentially of" refers to a composition, compound, formulation, or method that is inclusive of additional elements, components, or method steps that do not materially affect the characteristic(s) of the composition, compound, formulation, or method. The phrase "consisting essentially of" also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are example embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true scope of the invention.

## Claims

1. A method of utilizing a variable renewable energy comprising:

   using a look-ahead forecast model that provides an assessment of an available renewable energy,
   measuring an operation of one or more electrolyzer cell stacks in an electrolysis system to produce hydrogen by a controller that uses the look-ahead forecast model in real-time, and
   determining a time range of operation of each of the one or more electrolyzer cell stacks in the electrolysis system.

2. The method of claim 1, wherein the look-ahead forecast model assesses wind energy, solar energy, geothermal energy, hydro-energy, or any combination thereof.

3. The method of claim 1 or 2, further comprising minimizing loss or minimizing missed production, wherein minimizing loss comprises minimizing available renewable energy loss and minimizing missed production comprises minimizing potential loss due to suboptimal implementation of of the one or more electrolyzer cell stacks.

4. The method of any preceding claim, further comprising the controller determining the operation of the one or more electrolyzer cell stacks based on a characteristic of the electrolysis system, wherein the characteristic of the electrolysis system includes one or more of a capacity factor, a cost to produce hydrogen, and an availability of the electrolyzer cell stacks.

5. The method of any preceding claim, comprising the controller determining the operation of the one or more electrolyzer cell stacks based on a constant hydrogen demand due to a designated process demand.

6. The method of claim 5, comprising the controller determining if an excess hydrogen is being produced, and storing the excess hydrogen produced in a hydrogen storage system.

7. The method of claim 6, comprising the controller determining if the excess hydrogen is being produced based on the constant hydrogen demand due to the designated process.

8. The method of claim 6, comprising the controller operating the one or more electrolyzer cell stacks in the electrolysis system based on the excess hydrogen stored in the hydrogen storage system.

9. The method of claim 5, comprising the controller determining if insufficient hydrogen is being produced, supplementing the hydrogen with stored hydrogen or adding electricity from a supplementary grid to produce a balance of hydrogen.

10. The method of claim 5, comprising the controller determining if the excess hydrogen is being produced based on the constant hydrogen demand due to the designated process and minimizing utilizing a supplementary grid when the excess hydrogen is being produced.

11. The method of claim 5, comprising the controller determining if the excess hydrogen is being produced based on a downstream feedback from an equipment audit.

12. The method of any preceding claim, comprising the controller operating the one or more electrolyzer cell stacks to avoid a late start-up or to avoid missing out on the available renewable energy.

13. The method of any preceding claim, comprising the controller operating the one or more electrolyzer cell stacks to account for a change in renewable energy availability.

14. A system for utilizing available renewable energy comprising:

a controller in communication with a look-ahead forecast model,
an electrolysis system including one or more electrolyzer stacks, and
a hydrogen storage system to store an excess hydrogen produced,
wherein the controller is configured to operate the one or more electrolyzer stacks based on the look-ahead forecast model.

15. The system of claim 14, wherein the controller further regulates operation of the one or more electrolyzer cell stacks to account for changes in renewable energy availability.

EP 4 345 195 A2

84

82

81A

81E

81C

88

81

83

80

85

*FIG. 1A*

11,12

*FIG. 1B*

FIG. 1C

FIG. 2

FIG. 3

6/6

*FIG. 4A*

*FIG. 4B*